(19) **Europäisches Patentamt / European Patent Office / Office européen des brevets**

(11) **EP 4 737 245 A1**

(12) **EUROPEAN PATENT APPLICATION**
published in accordance with Art. 153(4) EPC

(43) Date of publication:
06.05.2026 Bulletin 2026/19

(21) Application number: 24830857.9

(22) Date of filing: 27.06.2024

(51) International Patent Classification (IPC):
**B60W 30/18** (2012.01)

(86) International application number:
**PCT/CN2024/101878**

(87) International publication number:
**WO 2025/002223 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 27.06.2023 CN 202310772068

(71) Applicant: **Guangzhou Xiaopeng Autopilot Technology Co., Ltd.**
**Guangzhou, Guangdong 510000 (CN)**

(72) Inventors:
- **FAN, Qi**
  **Guangzhou, Guangdong 510000 (CN)**

- **WANG, Yizhou**
  **Guangzhou, Guangdong 510000 (CN)**
- **XU, Shaolin**
  **Guangzhou, Guangdong 510000 (CN)**
- **QIU, Jie**
  **Guangzhou, Guangdong 510000 (CN)**
- **LI, Liyun**
  **Guangzhou, Guangdong 510000 (CN)**

(74) Representative: **Ran, Handong**
**Maucher Jenkins**
**Seventh Floor Offices**
**Artillery House**
**11-19 Artillery Row**
**London SW1P 1RT (GB)**

(54) **LANE CHANGING CONTROL METHOD AND APPARATUS, AND TERMINAL DEVICE AND STORAGE MEDIUM**

(57) Disclosed in the present application are a lane changing control method and apparatus, and a terminal device and a storage medium. The method comprises: in response to identifying a lane changing instruction, entering a lane changing execution state, and determining a risk level of the current vehicle; and if the risk level meets a first risk condition, selecting a risk target, and controlling the current vehicle and the risk target to execute interactive lane changing. By means of the solution of the present application, when a risk occurs during lane changing, a flexible response can be made, and interactive lane changing with a risk target is executed, thereby completing a lane changing behavior; thus, the solution of the present application can improve the flexibility of a vehicle while ensuring the safety and comfort of a lane changing behavior, thereby effectively improving the lane changing capability.

entering a lane change execution state in response to identification of a lane change instruction, and determining a risk level of a current vehicle — S10

if the risk level meets a first risk condition, selecting a risk target and controlling the current vehicle to perform an interactive lane change with the risk target — S20

Fig. 2

EP 4 737 245 A1

Description

**CROSS-REFERENCE TO RELATED APPLICATIONS**

This application claims priority to Chinese Patent Application No. 2023107720680, filed at the China National Intellectual Property Administration on June 27, 2023 and entitled "Lane change control method and apparatus, terminal device, and storage medium", which is incorporated herein by reference in its entirety.

**TECHNICAL FIELD**

The present application relates to the technical field of intelligent driving, and in particular to a lane change control method, a lane change control apparatus, a terminal device, and a storage medium.

**BACKGROUND**

Lane changing is one of the core capabilities of advanced driver assistance systems and autonomous driving systems. Lane change maneuver planning mainly involves two stages, namely lane change initiation and lane change execution. To ensure safety and comfort of lane change maneuvers, relevant technical solutions generally adopt a strategy of "emphasizing initiation more than execution". Specifically, emphasis is placed on evaluation of the initiation timing of a lane change, and execution of the lane change is allowed only when the longitudinal space is sufficiently safe. Moreover, a lane change is immediately cancelled once a risk appears during the lane changing. Such a strategy exhibits obvious shortcomings in complex scenarios such as urban environments, including conservative initiation and weak lane change capability, which results in low flexibility of vehicles during lane change execution.

It is therefore necessary to provide a solution for improving the flexibility of vehicles during lane change execution.

**SUMMARY**

To solve all or some of the problems existing in the related technologies, the present application provides a lane change control method, a lane change control apparatus, a terminal device, and a storage medium, aiming to improve the flexibility of vehicles during lane change execution.

To achieve the above objective, the present application provides a lane change control method. The lane change control method includes:

entering a lane change execution state in response to identification of a lane change instruction, and determining a risk level of a current vehicle; and
in response to the risk level meets a first risk condition, selecting a risk target and controlling the current vehicle to perform an interactive lane change with the risk target.

In an embodiment, the step of selecting a risk target and controlling the current vehicle to perform an interactive lane change with the risk target includes:

selecting the risk target;
acquiring driving information of the current vehicle and driving information of the risk target;
planning an avoidance path based on the driving information of the current vehicle and the driving information of the risk target;
controlling the current vehicle to move to an aligned state following the avoidance path; and
maintaining the current vehicle in the aligned state, acquiring lane conditions, and planning a driving path based on the lane conditions.

In an embodiment, the lane conditions include target lane conditions and current lane conditions; and the method, after acquiring the lane conditions, further includes:
reselecting a subsequent lane based on the target lane conditions and the current lane conditions.

In an embodiment, the method, after entering the lane change execution state and determining the risk level of the current vehicle, further includes:

changing the lane change execution state to a lane change cancellation state and controlling the current vehicle to return to its original lane, in response to the risk level meets a second risk condition; and
controlling the current vehicle to perform a normal lane change, in response to the risk level meets a third risk condition.

In an embodiment, the step of determining a risk level of a current vehicle includes:

acquiring information about a lane change space, information about a preceding vehicle in a target lane, information about a following vehicle in the target lane, and information about a static obstacle;
determining a longitudinal distance between the preceding vehicle in the target lane and the current vehicle based on the information about the preceding vehicle in the target lane, and determining a longitudinal distance between the following vehicle in the target lane and the current vehicle based on the information about the following vehicle in the target lane;
determining that the risk level meets the first risk condition, in response to the longitudinal distance between the preceding vehicle in the target lane and the current vehicle is within a first threshold range and the longitudinal distance between the following vehicle in the target lane and the current vehicle included in the information about the following vehicle in the target lane is within a second threshold range;

determining that the risk level meets the second risk condition, in response to the longitudinal distance between the preceding vehicle in the target lane and the current vehicle is within a third threshold range, or the longitudinal distance between the following vehicle in the target lane and the current vehicle included in the information about the following vehicle in the target lane is within a fourth threshold range, or a static obstacle is present within a preset range in the target lane; and

determining that the risk level meets the third risk condition, in response to no preceding vehicle, no following vehicle, and no static obstacle are present within the preset range in the target lane.

In an embodiment, the information about the preceding vehicle in the target lane includes a relative position, speed, acceleration, time headway, and risk coefficient of the preceding vehicle in the target lane with respect to the current vehicle; and the information about the following vehicle in the target lane includes a relative position, speed, acceleration, time headway, and risk coefficient of the following vehicle in the target lane with respect to the current vehicle.

In an embodiment, the step of determining a longitudinal distance between the preceding vehicle in the target lane and the current vehicle based on the information about the preceding vehicle in the target lane includes:

calculating a minimum forward following distance based on the relative position, speed, acceleration and time headway of the preceding vehicle in the target lane with respect to the current vehicle; and calculating the longitudinal distance between the preceding vehicle in the target lane and the current vehicle based on the minimum forward following distance and the risk coefficient of the preceding vehicle.

In an embodiment, the step of determining a longitudinal distance between the following vehicle in the target lane and the current vehicle based on the information about the following vehicle in the target lane includes:

calculating a minimum rearward following distance based on the relative position, speed, acceleration and time headway of the following vehicle in the target lane with respect to the current vehicle; and calculating the longitudinal distance between the following vehicle in the target lane and the current vehicle based on the minimum rearward following distance and the risk coefficient of the following vehicle.

In an embodiment, the method, before entering the lane change execution state in response to identification of a lane change instruction, further includes:

determining a lane change need based on at least one of a navigation need, a need to overtake a slow-moving vehicle, and a need to bypass an obstacle; determining whether a lane change space is available based on the lane change need; and generating the lane change instruction in response to a lane change space is available.

In an embodiment, the step of planning an avoidance path based on the driving information of the current vehicle and the driving information of the risk target includes:

determining a position of a front axle center of the current vehicle based on the driving information of the current vehicle; determining a target lane guidance line of a lane where the risk target is located based on the driving information of the risk target; calculating a lateral offset based on the position of the front axle center of the current vehicle and the target lane guidance line; and determining the avoidance path based on the lateral offset.

To achieve the above-mentioned objective, the present application further provides a lane change control apparatus. The lane change control apparatus includes:

a determining module, configured to enter a lane change execution state in response to identification of a lane change instruction, and determine a risk level of a current vehicle; and an executing module, configured to, in response to the risk level meets a first risk condition, select a risk target and control the current vehicle to perform an interactive lane change with the risk target.

To achieve the above-mentioned objective, the present application further provides a terminal device. The terminal device includes a memory, a processor, and a lane change control program stored in the memory and executable on the processor. The lane change control program, when executed by the processor, implements the steps of the lane change control method described above.

To achieve the above-mentioned objective, the present application further provides a computer-readable storage medium having a lane change control program stored thereon. The lane change control program, when executed by the processor, implements the steps of the lane change control method described above.

Embodiments of the present application provide a lane change control method, lane change control apparatus, terminal device, and storage medium. In response to detecting a lane change instruction, a current vehicle enters a lane change execution state and determines its risk level. If the risk level meets a first risk condition, a risk target is selected and the current vehicle is controlled to perform an interactive lane change with respect to the risk target. This enables the current vehicle to respond flexibly to risks during the lane change and perform an interactive lane change with the risk target, allowing the vehicle to complete the lane change maneuver. This improves the vehicle's maneuverability during lane changes, while ensuring the safety and comfort of the maneuver, thereby effectively enhancing its lane change capability.

## BRIEF DESCRIPTION OF THE DRAWINGS

The above and other objectives, features and advantages of the present application will become more apparent through a more detailed description of exemplary embodiments of the present application in conjunction with the accompanying drawings. In the exemplary embodiments of the present application, the same reference numerals generally represent the same components.

Fig. 1 is a schematic diagram of functional modules of a terminal device to which a lane change control apparatus of the present application belongs;
Fig. 2 is a flow chart of an exemplary embodiment of a lane change control method of the present application;
Fig. 3 is a schematic diagram of a longitudinal lane change space in an embodiment of the present application;
Fig. 4 is a flow chart of another exemplary embodiment of the lane change control method of the present application;
Fig. 5 is a first schematic diagram of a lane change execution state in an embodiment of the present application;
Fig. 6 is a second schematic diagram of a lane change execution state in an embodiment of the present application;
Fig. 7 is a third schematic diagram of a lane change execution state in an embodiment of the present application;
Fig. 8 is a specific schematic flow chart of step S20 in the embodiment shown in Fig. 2;
Fig. 9 is a schematic diagram of a preceding slow-moving target in an embodiment of the present application;
Fig. 10 is a schematic diagram of a following fast-moving target in an embodiment of the present application;
Fig. 11 is a schematic diagram of a target simultaneously performing a lane change in an embodiment of the present application;
Fig. 12 is a schematic diagram of an interactive execution path in an embodiment of the present application; and
Fig. 13 is a schematic flow chart of the entire lane change control method in an embodiment of the present application.

## DETAILED DESCRIPTION

Embodiments of the present application will be described in more detail below with reference to the accompanying drawings. It should be appreciated that although embodiments of the present application are shown in the accompanying drawings, the present application can be implemented in various forms and should not be limited to the embodiments described herein. These embodiments are provided to give a thorough and complete description of the present application, so that the scope of the present application could be fully conveyed to those of ordinary skill in the art.

Terms used in the present application are for the purpose of describing specific embodiments only and are not intended to limit the present application. Terms "a", "said" and "the" used in the present application and the appended claims are intended to include singular forms as well as plural forms unless it is explicitly stated that other meanings are indicated. It should also be appreciated that the term "and/or" used herein refers to and includes any or all possible combinations of one or more associated listed items.

The present application is described in detail below. Examples of the present application are shown in the accompanying drawings throughout which the same or similar reference numerals represent the same or similar elements or elements having the same or similar functions. The embodiments described below with reference to the accompanying drawings are exemplary and are intended to be used to explain the present application and should not be construed as limiting the present application.

The solution provided in the embodiments of the present application includes: entering a lane change execution state in response to identification of a lane change instruction, and determining a risk level of a current vehicle; and if the risk level meets a first risk condition, selecting a risk target and controlling the current vehicle to perform an interactive lane change with the risk target. This allows the vehicle to respond flexibly to risks arising during the lane change and perform an interactive lane change with the risk target, so as to complete the lane change maneuver. This improves the maneuverability of the vehicle while ensuring the safety and comfort of the lane change maneuver, thereby effectively enhancing its lane change capability.

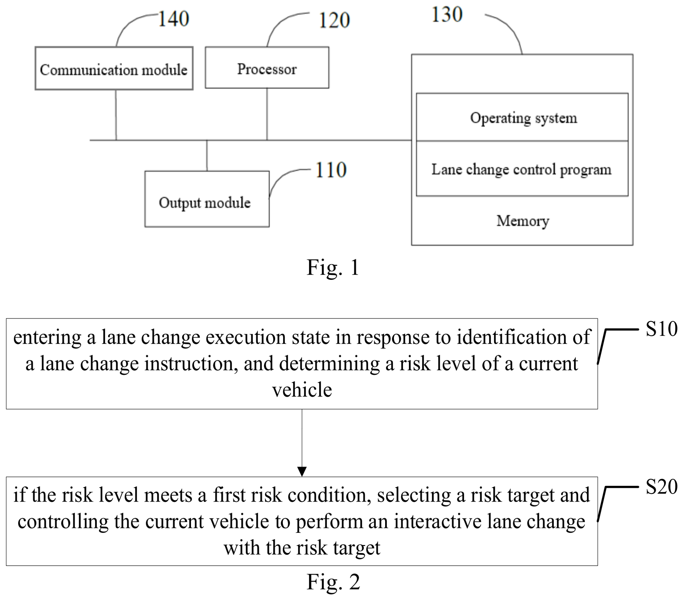

Fig. 1 is a schematic diagram showing functional modules of a terminal device to which a lane change control apparatus of the present application belongs. The lane change control apparatus may be an apparatus independent of the terminal device and capable of performing lane change control, and it may be implemented on the terminal device in the form of hardware or software. The terminal device may be a smart mobile terminal with data processing functions, such as a mobile phone or a tablet computer, or may be a fixed terminal device or server with data processing functions.

In the present embodiment, the terminal device to which the lane change control apparatus belongs includes at least an output module 110, a processor 120, a memory 130, and a communication module 140.

The memory 130 has an operating system and a lane change control program stored thereon. The lane change control apparatus may store information such as a lane change instruction and a selected risk target in the memory 130. The output module 110 may be a display screen and the like. The communication module 140 may include a WIFI module, a mobile communication module, a Bluetooth module, etc. Communication with an external device or server is realized through the communication module 140.

The lane change control program in the memory 130, when executed by the processor, implements the following steps:

entering a lane change execution state in response to identification of a lane change instruction, and determining a risk level of a current vehicle; and

if the risk level meets a first risk condition, selecting a risk target and controlling the current vehicle to perform an interactive lane change with the risk target.

In an embodiment, the lane change control program in the memory 130, when executed by the processor, further implements the following steps:

selecting the risk target;

acquiring driving information of the current vehicle and driving information of the risk target;

planning an avoidance path based on the driving information of the current vehicle and the driving information of the risk target;

controlling the current vehicle to move to an aligned state following the avoidance path; and

maintaining the current vehicle in the aligned state, acquiring lane conditions, and planning a driving path based on the lane conditions.

In an embodiment, the lane change control program in the memory 130, when executed by the processor, further implements the following step:

reselecting a subsequent lane based on the target lane conditions and the current lane conditions.

In an embodiment, the lane change control program in the memory 130, when executed by the processor, further implements the following steps:

changing the lane change execution state to a lane change cancellation state and controlling the current vehicle to return to its original lane, if the risk level meets a second risk condition; and

controlling the current vehicle to perform a normal lane change, if the risk level meets a third risk condition.

In an embodiment, the lane change control program in the memory 130, when executed by the processor, further implements the following steps:

acquiring information about a lane change space, information about a preceding vehicle in a target lane, information about a following vehicle in the target lane, and information about a static obstacle;

determining a longitudinal distance between the preceding vehicle in the target lane and the current vehicle based on the information about the preceding vehicle in the target lane, and determining a longitudinal distance between the following vehicle in the target lane and the current vehicle based on the information about the following vehicle in the target lane;

determining that the risk level meets the first risk condition, if the longitudinal distance between the preceding vehicle in the target lane and the current vehicle is within a first threshold range and the longitudinal distance between the following vehicle in the target lane and the current vehicle included in the information about the following vehicle in the target lane is within a second threshold range;

determining that the risk level meets the second risk condition, if the longitudinal distance between the preceding vehicle in the target lane and the current vehicle is within a third threshold range, or the longitudinal distance between the following vehicle in the target lane and the current vehicle included in the information about the following vehicle in the target lane is within a fourth threshold range, or a static obstacle is present within a preset range in the target lane; and

determining that the risk level meets the third risk condition, if no preceding vehicle, no following vehicle, and no static obstacle are present within a preset range in the target lane.

In an embodiment, the lane change control program in the memory 130, when executed by the processor, further implements the following steps:

calculating a minimum forward following distance based on the relative position, speed, acceleration and time headway of the preceding vehicle in the target lane with respect to the current vehicle; and

calculating a longitudinal distance between the preceding vehicle in the target lane and the current vehicle based on the minimum forward following distance and a risk coefficient of the preceding vehicle.

In an embodiment, the lane change control program in the memory 130, when executed by the processor, further implements the following steps:

> calculating a minimum rearward following distance based on the relative position, speed, acceleration and time headway of the following vehicle in the target lane with respect to the current vehicle; and calculating a longitudinal distance between the following vehicle in the target lane and the current vehicle based on the minimum rearward following distance and a risk coefficient of the following vehicle.

In an embodiment, the lane change control program in the memory 130, when executed by the processor, further implements the following steps:

> determining a lane change need based on at least one of a navigation need, a need to overtake a slow-moving vehicle, and a need to bypass an obstacle; determining whether a lane change space is available based on the lane change need; and generating a lane change instruction if a lane change space is available.

In an embodiment, the lane change control program in the memory 130, when executed by the processor, further implements the following steps:

> determining the position of the front axle center of the current vehicle based on the driving information of the current vehicle; determining a target lane guidance line of a lane where the risk target is located based on the driving information of the risk target; calculating a lateral offset based on the position of the front axle center of the current vehicle and the target lane guidance line; and determining an avoidance path based on the lateral offset.

The above solution of the present embodiment includes: entering a lane change execution state in response to identification of a lane change instruction, and determining a risk level of a current vehicle; and selecting a risk target and controlling the current vehicle to perform an interactive lane change with the risk target if the risk level meets a first risk condition. This allows the vehicle to respond flexibly to risks arising during the lane change and perform an interactive lane change with respect to the risk target, so as to complete the lane change maneuver. This improves the maneuverability of the vehicle while ensuring the safety and comfort of the lane change maneuver, thereby effectively enhancing its lane change capability.

Method embodiments of the present application are provided based on the architecture of the above terminal device but are not limited to the above architecture.

Methods in these embodiments may be implemented by a lane change control apparatus or a terminal device and the like, and a lane change control apparatus is taken as an example herein.

Fig. 2 is a schematic flow chart of an exemplary embodiment of a lane change control method of the present application. The lane change control method includes the following steps.

In step S10, in response to identification of a lane change instruction, a lane change execution state is entered, and a risk level of a current vehicle is determined.

The lane change control method in the embodiments of the present application may be applied to an intelligent driving system such as a driver assistance system or an autonomous driving system. The lane change instruction received by the system may be a lane change instruction issued by a user, or it may be a lane change instruction automatically issued by the system according to actual needs.

In an embodiment, the method, before the step of entering a lane change execution state in response to identification of a lane change instruction, further includes the following steps:

> determining a lane change need based on at least one of a navigation need, a need to overtake a slow vehicle, and a need to bypass an obstacle; determining whether a lane change space is available based on the lane change need; and generating the lane change instruction if a lane change space is available.

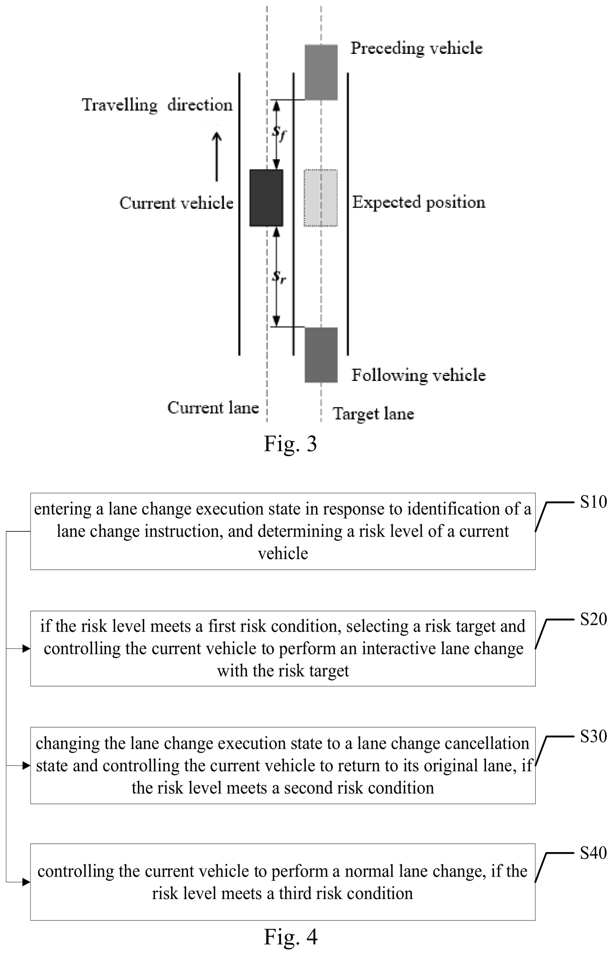

For example, in determining whether and under what conditions a lane change can be initiated, it is first determined whether to initiate a lane change based on needs such as navigation requirements, overtaking a slow vehicle, and bypassing an obstacle. Then, it is determined based on availability of a lane change space whether a lane change can be initiated. The conditions for initiating a lane change mainly depend on the safety of the longitudinal lane change space. Fig. 3 is a schematic diagram showing the longitudinal lane change space in the embodiments of the present application. As shown in Fig. 3, the following conditions need to be satisfied:

$$S_f \geq S_{f\,min}, \; S_r \geq S_{r\,min},$$

where $S_f$ and $S_r$ respectively represent the longitudinal distance between the current vehicle and the preceding vehicle in the target lane and the longitudinal distance between the current vehicle and the following vehicle in the target lane; $S_{f\,min}$ and $S_{r\,min}$ respectively represent a minimum forward safety distance and a minimum rearward safety distance required for the lane change, which generally depend on such as the relative positions, speeds, accelerations of the current vehicle and the preceding and following vehicles in the target lane. For example, $S_{fmin} = \max(S_{f0}, t_{fmin}, {}^*\Delta v)$, where $S_{f0}$ and $t_{fmin}$ represent the minimum forward following distance and the time headway, respectively.

When there is a lane change demand due to needs such as navigation requirements, overtaking a slower vehicle, or bypassing an obstacle, it is determined whether a lane change space is available. If a lane change space is available, a lane change instruction may be automatically issued.

In an embodiment, after detecting the lane change instruction, the system controls the current vehicle to enter the lane change execution state. During lane change execution, a subsequent state is determined based on presence of the presence of a risk and the risk level.

In step S20, if the risk level meets a first risk condition, a risk target is selected, and the current vehicle is controlled to perform an interactive lane change with the risk target.

In a further embodiment, the risk level in the present application may involve three categories. When the risk level meets the first risk condition, that is, there is a risk target but with a low urgency, the lane change may be completed by controlling the current vehicle to interact with the risk target. When the risk level meets the second risk condition, that is, there is a relatively urgent risk target or there is a static obstacle ahead in the target lane, it is more reasonable to cancel the lane change, and the current vehicle is controlled to cancel the lane change. When the risk level meets the third risk condition, that is, there is no risk target and there is a sufficient lane change space, the lane change can be performed normally.

In the present embodiment, in response to identification of a lane change instruction, the current vehicle enters a lane change execution state, and a risk level of the current vehicle is determined. If the risk level meets a first risk condition, a risk target is selected and the current vehicle is controlled to perform an interactive lane change with the risk target. This allows the current vehicle to respond flexibly to risks during the lane change and perform an interactive lane change with the risk target to complete the lane change maneuver, which improves the flexibility of the vehicle and effectively enhances its lane change capability while ensuring the safety and comfort of the lane change maneuver.

Fig. 4 is a schematic flow chart of another exemplary embodiment of the lane change control method of the present application.

Based on the embodiment shown in Fig. 2, in this embodiment, the lane change control method further includes the following steps after entering the lane change execution state and determining the risk level of the current vehicle.

In step S30, if the risk level meets a second risk condition, the lane change execution state is changed to a lane change cancellation state, and the current vehicle is controlled to return to its original lane.

In step S40, if the risk level meets a third risk condition, the current vehicle is controlled to perform a normal lane change.

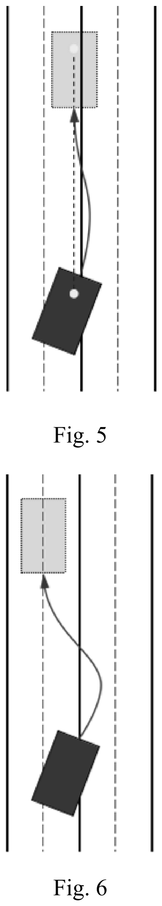

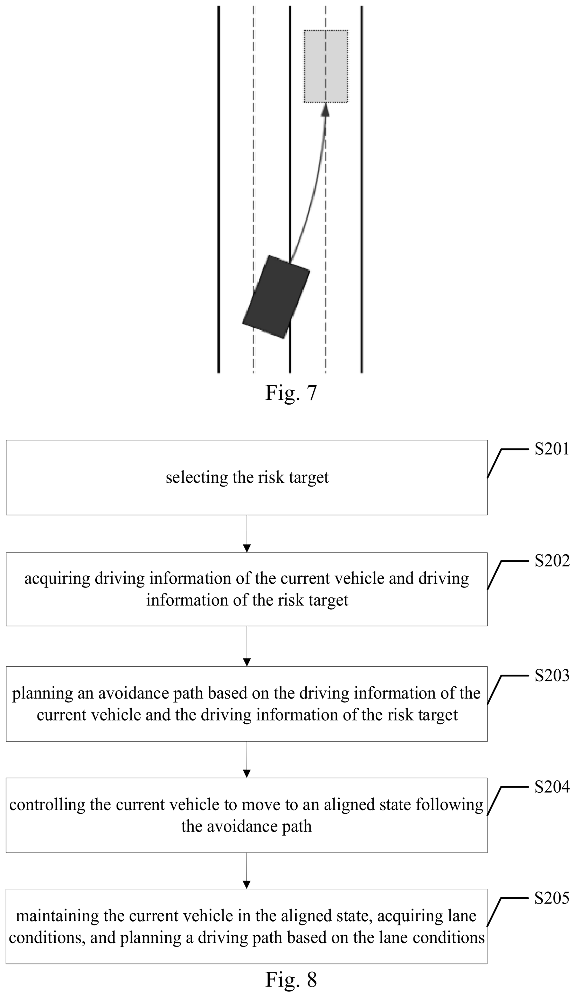

Fig. 5 is a first schematic diagram of the lane change execution state in the embodiments of the present application. As shown in Fig. 5, when the risk level meets the first risk condition where there is a risk target but urgency is low, the lane change may be completed by controlling the current vehicle to interact with the risk target. Fig. 6 is a second schematic diagram of the lane change execution state in the embodiments of the present application. As shown in Fig. 6, when the risk level meets the second risk condition where there is a relatively urgent risk target or there is a static obstacle ahead in the target lane, it is more reasonable to cancel the lane change, and the current vehicle is controlled to do so. Fig. 7 is a third schematic diagram of the lane change execution state in the embodiments of the present application. As shown in Fig. 7, when the risk level meets the third risk condition where there is no risk target and there is a sufficient lane change space, the lane change may be performed normally.

In an embodiment, determining the risk level of the current vehicle, that is, a step of performing a risk level assessment, includes:

acquiring information about a lane change space, information about a preceding vehicle in a target lane, information about a following vehicle in the target lane, and information about a static obstacle; determining a longitudinal distance between the preceding vehicle in the target lane and the current vehicle based on the information about the preceding vehicle in the target lane, and determining a longitudinal distance between the following vehicle in the target lane and the current vehicle based on the information about the following vehicle in the target lane;

determining that the risk level meets the first risk condition, if the longitudinal distance between the preceding vehicle in the target lane and the current vehicle is within a first threshold range and the longitudinal distance between the following vehicle in the target lane and the current vehicle included in the information about the following vehicle in the target lane is within a second threshold range;

determining that the risk level meets the second risk condition, if the longitudinal distance between the preceding vehicle in the target lane and the current vehicle is within a third threshold range, or the longitudinal distance between the following vehicle in the target lane and the current vehicle included in the information about the following vehicle in the target lane is within a fourth threshold range, or a static obstacle is present within a preset range in the target lane; and

determining that the risk level meets the third risk condition, if no preceding vehicle, no following vehicle, and no static obstacle are present within a preset range in the target lane.

In an embodiment, the information about the preceding vehicle in the target lane includes a relative position, speed, acceleration, time headway, and risk coefficient of the preceding vehicle in the target lane with respect to the current vehicle. The information about the following vehicle in the target lane includes a relative position, speed, acceleration, time headway, and risk coefficient of the following vehicle in the target lane with respect to the current vehicle

In an embodiment, the step of determining the longitudinal distance between the preceding vehicle in the target lane and the current vehicle based on the information about the preceding vehicle in the target lane includes:

calculating a minimum forward following distance based on the relative position, speed, acceleration and time headway of the preceding vehicle in the target lane with respect to the current vehicle; and calculating the longitudinal distance between the preceding vehicle in the target lane and the current vehicle based on the minimum forward following distance and the risk coefficient of the preceding vehicle.

In an embodiment, the step of determining the longitudinal distance between the following vehicle in the target lane and the current vehicle based on the information about the following vehicle in the target lane includes:

calculating a minimum rearward following distance based on the relative position, speed, acceleration and time headway of the following vehicle in the target lane with respect to the current vehicle; and calculating the longitudinal distance between the following vehicle in the target lane and the current vehicle based on the minimum rearward following distance and the risk coefficient of the following vehicle.

For example, under the first risk condition, the risk level may be considered normal, in which case $S_f \geq C_f * S_{f min}$, $S_r \geq C_r * S_{r min}$, where $C_f$ and $C_r$ are risk coefficients which may be dynamically adjusted depending on factors such as the control capability of the vehicle and the driver's receptiveness. In this instance, the current vehicle is allowed to dynamically interact with a surrounding risk target, for example, avoiding a fast-moving target behind or bypassing a slow-moving target in front, to perform an interactive lane change.

In an embodiment, under the second risk condition, the risk level may be considered high, or it is more reasonable to cancel the lane change. For example, when $S_f$ or $S_r$ is sharply reduced, i.e., $S_f < C_f * S_{f min}$ or $S_r < C_r * S_{r min}$, it means that the risk level is rather high. When a static obstacle is present ahead in the target lane and it is necessary for the current vehicle to bypass it or change the lane again later, it may be determined that it is more reasonable to abort the lane change.

In an embodiment, under the third risk condition where a sufficient lane change space is available, the lane change may be performed normally without adjusting the lane change path.

According to the above solution of the present embodiment, if the risk level meets the second risk condition, the lane change execution state is changed to the lane change cancellation state, and the current vehicle is controlled to return to its original lane; and if the risk level meets the third risk condition, the current vehicle is controlled to perform a normal lane change. This effectively considers influencing factors during the lane changing, flexibly adjusts the lane change state depending on changes in the lane change space and in risk factors, thus ensuring safety and flexibility in lane changing.

Fig. 8 is a specific schematic flow chart of step S20 in the embodiment shown in Fig. 2. This embodiment is based on the above embodiment shown in Fig. 2. In this embodiment, the above step S20 includes the following sub-steps.

In sub-step S201, a risk target is selected.

In sub-step S202, driving information of the current vehicle and driving information of the risk target are acquired.

In sub-step S203, an avoidance path is planned based on the driving information of the current vehicle and the driving information of the risk target.

In sub-step S204, the current vehicle is controlled to move to an aligned state following the avoidance path.

In sub-step S205, the current vehicle is maintained in the aligned state; lane conditions are acquired; and a driving path is planned based on the lane conditions.

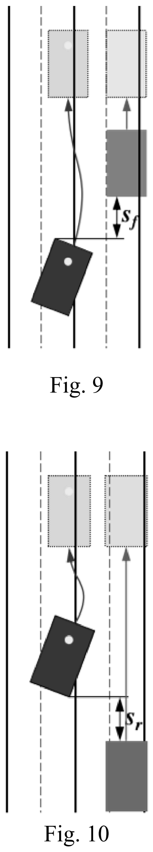

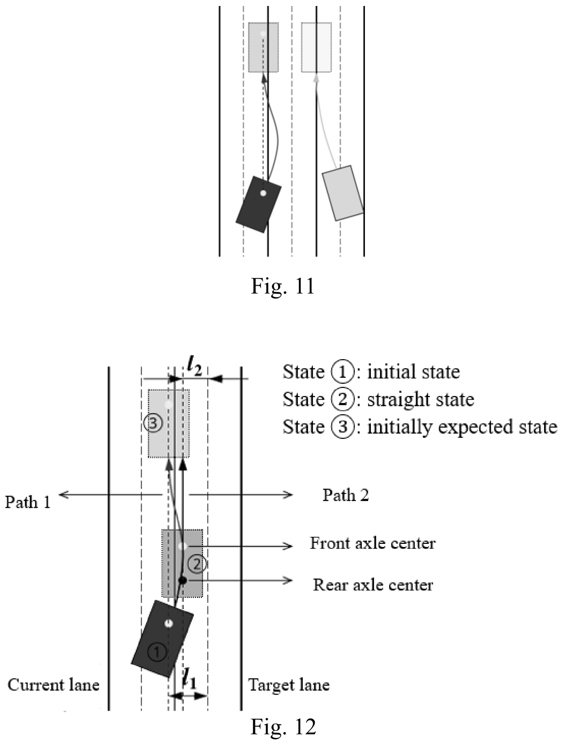

For example, risk targets in the embodiments of the present application mainly include slow-moving targets ahead, fast-moving targets behind, targets in a third lane that perform lane changing simultaneously, etc. Refer now to Figs. 9, 10 and 11. Fig. 9 is a schematic diagram of a slow-moving target ahead in the embodiments of the present application. Fig. 10 is a schematic diagram of a fast-moving target behind in the embodiments of the present application. Fig. 11 is a schematic diagram of a target that performs lane change simultaneously in the embodiments of the present application. A risk target generally refers to an object that may collide with the current vehicle or seriously affect the driving efficiency of the current vehicle during subsequent lane change. For the current vehicle, one or more risk targets may exist simultaneously, and with respect to each risk target, the current vehicle can perform an interactive lane change.

In an embodiment, the step of planning an avoidance path based on the driving information of the current vehicle and the driving information of the risk target includes:

determining a position of a front axle center of the current vehicle based on the driving information of the current vehicle;
determining a target lane guidance line of a lane where the risk target is located based on the driving information of the risk target;
calculating a lateral offset based on the position the front axle center of the current vehicle and the target lane guidance line; and
determining the avoidance path based on the lateral offset.

For example, after it is determined that a risk target is present, it is necessary to avoid the risk target. An avoidance path can be planned based on the driving information of the current vehicle and the driving information of the risk target. Based on the driving information of the current vehicle, the position of the front axle center of the current vehicle can be determined; and based on the driving information of the risk target, a target lane guidance line (also called centerline) of the lane where the risk target is located can be determined. Thus, by controlling a lateral offset of the front axle center of the current vehicle from the target lane guidance line, a safe distance between the current vehicle and the risk target can be ensured. In this way, a movement path from an initial state to an desired state can be planned based on the lateral offset between the front axle center of the current vehicle and the target lane guidance line of the lane where the risk target is located. This movement path serves as the avoidance path for the current vehicle. During the movement of the current vehicle from the initial state toward the desired state, the current vehicle will reach an aligned state in which its body is parallel to the target lane guidance line. Upon reaching the aligned state, since there is no longer a risk of collision with the risk target, the current vehicle does not need to follow the avoidance path all the way to the desired state, and it can travel along a re-planned path (for example, moving straight forward). During control of movement of the current vehicle, the avoidance path can also be updated based on information such as the current position and the current heading angle of the current vehicle. The avoidance path is intended to ensure that the subsequent traveling path of the current vehicle remains parallel to the target lane guidance line, thereby avoiding active impact on traffic flows in its left and right lanes.

Fig. 12 is a schematic diagram of an interactive execution path in the embodiments of the present application. As shown in Fig. 12, based on the lateral offset $l_1$ of the front axle center of the current vehicle relative to the target lane guidance line at the time point when the target vehicle is in state ① (i.e., the initial state after switching from normal execution to interactive execution), a movement path (path 1 in Fig. 12) from state ① to state ③ is planned. Then, during the process of executing path 1 by the current vehicle, if it is detected that the body of the current vehicle has reached state ② (where the vehicle body is aligned and substantially parallel to the target lane guidance line), the path is re-planned to maintain the current vehicle traveling along path 2 as shown in Fig. 12.

In an embodiment, the lane conditions include target lane conditions and current lane conditions. After t acquiring the lane conditions, the method further includes the following step:
reselecting a subsequent lane based on the target lane conditions and the current lane conditions.

For example, in the interactive execution state, a subsequent lane may be flexibly selected depending on the target lane conditions and the current lane conditions. For example, if the target lane is quite congested and the current lane is relatively clear, the current lane may be selected; or a lane may be selected depending on navigation needs. This can further enhance the intelligence of the vehicle in lane changing, thereby enhancing user experience.

The above solution of the present embodiment includes: selecting a risk target; acquiring driving information of the current vehicle and driving information of the risk target; planning an avoidance path based on the driving information of the current vehicle and the driving information of the risk target; controlling the current vehicle to move to an aligned state following the avoidance path; maintaining the current vehicle in the aligned state; acquiring lane conditions; and planning a driving path based on the lane conditions. This enables a dynamic interaction function with risk targets, enabling active avoidance and bypassing capabilities during lane change execution. It effectively reduces the high requirements for lane change spaces and mitigates lane change cancellations due to factors such as uncertainty in perception and changes in lane change spaces, thereby significantly improving the lane change capability of the vehicle while ensuring safety.

The embodiments of the present application further provide a lane change control apparatus. The lane change control apparatus includes:

a determining module, configured to enter a lane change execution state and determine a risk level of a current vehicle, in response to identification of a lane change instruction; and
an executing module, configured to select a risk target and control the current vehicle to perform an interactive lane change with the risk target, if the risk level meets a first risk condition.

The executing module is configured to: select a risk target; acquire driving information of the current vehicle and driving information of the risk target; plan an avoidance path based on the driving information of the current vehicle and the driving information of the risk target; control the current vehicle to move to an aligned state following the avoidance path; and maintain the current vehicle in the aligned state, acquire lane conditions, and plan a driving path based on the lane conditions.

The executing module is further configured to: change the lane change execution state to a lane change cancellation state and control the current vehicle to return to its original lane, if the risk level meets a second risk condition; and control the current vehicle to perform a normal lane change, if the risk level meets a third risk condition.

The determining module is configured to: acquire information about a lane change space, information about a preceding vehicle in a target lane, information about a following vehicle in the target lane, and information about a static obstacle; determine a longitudinal distance between the preceding vehicle in the target lane and the current vehicle based on the information about the preceding vehicle in the target lane, and determine a longitudinal distance between the following vehicle in the target lane and the current vehicle based on the information about the following vehicle in the target lane; determine that the risk level meets the first risk condition, if the longitudinal distance between the preceding vehicle in the target lane and the current vehicle is within a first threshold range and the information about the following vehicle in the target lane indicates that the longitudinal distance between the following vehicle in the target lane and the current vehicle is within a second threshold range; determine that the risk level meets the second risk condition, if the longitudinal distance between the preceding vehicle in the target lane and the current vehicle is within a third threshold range, or the information about the following vehicle in the target lane indicates that the longitudinal distance between the following vehicle in the target lane and the current vehicle is within a fourth threshold range, or a static obstacle is present within a preset range in the target lane; and determine that the risk level meets the third risk condition, if no preceding vehicle, no following vehicle, and no static obstacle are present within a preset range in the target lane.

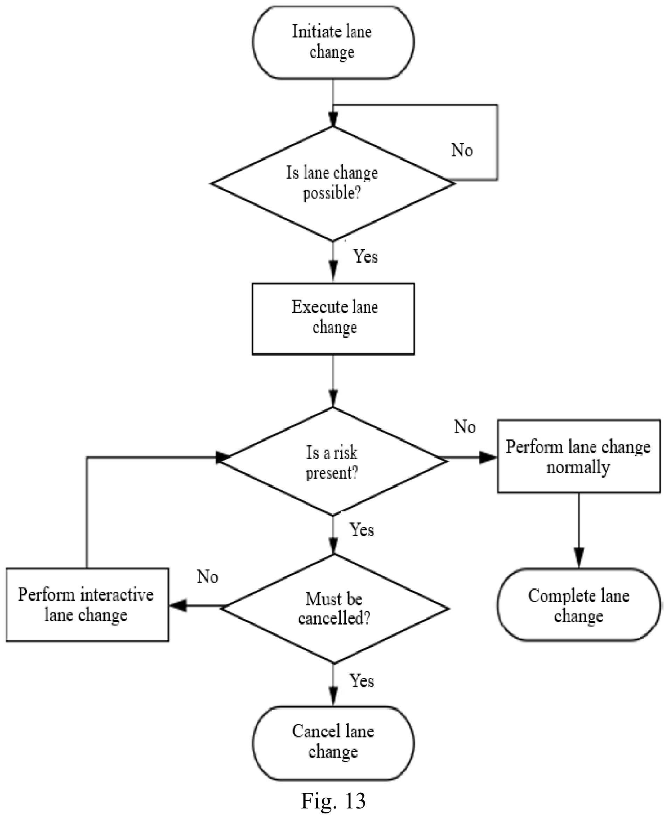

Fig. 13 is a schematic flow chart showing the entire process of the lane change control method in the embodiments of the present application. As shown in Fig. 13, in determining whether and under what conditions a lane change can be initiated, it is first determined whether to initiate a lane change based on needs such as navigation requirements, overtaking a slow vehicle, and bypassing an obstacle. Then, it is determined based on availability of a lane change space whether a lane change can be initiated. The conditions for initiating a lane change mainly depend on the safety of the longitudinal lane change space. When there is a lane change demand due to needs such as navigation requirements, overtaking a slower vehicle, or bypassing an obstacle, it is determined whether a lane change space is available. If a lane change space is available, a lane change instruction may be automatically issued. After detecting the lane change instruction, the system controls the current vehicle to enter the lane change execution state. During lane change execution, a subsequent state is determined based on presence of the presence of a risk and the risk level. When it is determined that a risk is present, it is further determined whether the lane change must be canceled. If cancellation is required, the lane change is canceled; if cancellation is not required, an interactive lane change may be performed. When it is determined that no risk is present, a lane change may be performed normally until completion.

In this embodiment, by providing the function of dynamic interactions with surrounding key targets during lane changing, the current vehicle is provided with the capability active avoidance (for fast-moving targets behind in the target lane) and bypassing (for slow-moving targets and static obstacles ahead in the target lane), which can effectively lower the high requirements for lane change space and reduce cancellation of lane changes due to factors such as perception uncertainties and changes in lane change space. As a result, a "human-like" lane changing experience is achieved, enabling more reasonable and natural lane change behavior, and significantly enhancing lane changing capabilities while ensuring safety.

Principles and implementation processes of the lane change control in this embodiment can be found in the descriptions of the foregoing embodiments and will not be described herein again.

The embodiments of the present application further provide a terminal device. The terminal device includes a memory, a processor, and a lane change control program stored in the memory and executable on the processor. The lane change control program, when executed by the processor, implements steps of the lane change control method as described above.

In the present embodiment, when executing the lane change control program by the processor, all the technical solutions of the foregoing embodiments are adopted. The present embodiment therefore at least has all the beneficial effects brought by all the technical solutions of the foregoing embodiments, which will not be detailed herein.

The embodiments of the present application further provide a computer-readable storage medium having a lane change control program stored thereon. The lane change control program, when executed by a processor, implements steps of the lane change control method as described above.

In this embodiment, when executing the lane change control program by the processor, all the technical solutions of the foregoing embodiments are adopted.

This embodiment therefore at least has all the beneficial effects brought by all the technical solutions of the foregoing embodiments, which will not be detailed herein.

Compared with related technologies, the lane change control method, the lane change control apparatus, the terminal device, and the storage medium provided in the embodiments of the present application, by entering a lane change execution state and determining a risk level of a current vehicle in response to identification of a lane change instruction, and selecting a risk target and controlling the current vehicle to perform an interactive lane change by interacting with the risk target if the risk level meets a first risk condition, allow the current vehicle to respond flexibly when risks arise during lane changing and perform an interactive lane change by interacting with the risk target to thus complete a lane change maneuver, which improves the flexibility of the vehicle and effectively enhances its lane change capability while ensuring the safety and comfort of the lane change maneuver.

It should be noted that the terms "include", "comprise" or any variations thereof as used herein are intended to cover non-exclusive inclusion, so that a process, method, article or system including a list of elements includes not only those listed elements but also other elements not explicitly listed, or also includes elements inherent to such a process, method, article or system. In the absence of further defining, an element defined by the expression "comprises/comprising/includes/including a ..." does not exclude the existence of other identical elements in a process, method, article or system including the element.

Serial numbers provided for the above embodiments of the present application are for description only and do not imply any preference of one embodiment over another.

Through the description of the above embodiments, those of ordinary skill in the art may readily appreciate that the methods of the above embodiments may be implemented by means of software plus necessary general hardware platforms and may also of course be implemented by means of hardware, but in many cases the former is preferred. Based on such an understanding, the technical solutions of the present application in their essence or the part thereof contributing to related technologies may be embodied in the form of a computer software product. This computer software product is stored in an aforementioned storage medium (such as ROM/RAM, a disk, an optical disc) and includes a number of instructions to allow a terminal device (which may be a mobile phone, a computer, a server, or a network device, etc.) to implement the methods described in the embodiments of the present application.

The above descriptions of embodiments of the present application are exemplary, not exhaustive. The present application is not limited to the above-described embodiments. Many modifications and changes, without departing from the scope and spirit of the embodiments described, will be apparent to those of ordinary skill in the art. The selection of terms used herein is intended to best explain the principles and practical applications of the embodiments, or to best explain improvements to technologies in the market, or to enable others of ordinary skill in the art to understand the embodiments disclosed herein.

## Claims

1. A lane change control method, comprising:

   entering a lane change execution state in response to identification of a lane change instruction, and determining a risk level of a current vehicle; and
   in response to the risk level meets a first risk condition, selecting a risk target and controlling the current vehicle to perform an interactive lane change with the risk target.

2. The lane change control method according to claim 1, wherein said selecting a risk target and controlling the current vehicle to perform an interactive lane change with the risk target comprises:

   selecting the risk target;
   acquiring driving information of the current vehicle and driving information of the risk target;
   planning an avoidance path based on the driving information of the current vehicle and the driving information of the risk target;
   controlling the current vehicle to move to an aligned state following the avoidance path; and
   maintaining the current vehicle in the aligned state, acquiring lane conditions, and planning a driving path based on the lane conditions.

3. The lane change control method according to claim 2, wherein:

   the lane conditions comprise target lane conditions and current lane conditions; and
   the method, after acquiring the lane conditions, further comprises reselecting a subsequent lane based on the target lane conditions and the current lane conditions.

4. The lane change control method according to claim 1, after entering the lane change execution state and determining the risk level of the current vehicle, further comprising:

   changing the lane change execution state to a lane change cancellation state and controlling the current vehicle to return to its original lane, in response to the risk level meets a second risk condition; and

controlling the current vehicle to perform a normal lane change, in response to the risk level meets a third risk condition.

5. The lane change control method according to claim 4, wherein said determining a risk level of a current vehicle comprises:

acquiring information about a lane change space, information about a preceding vehicle in a target lane, information about a following vehicle in the target lane, and information about a static obstacle;

determining a longitudinal distance between the preceding vehicle in the target lane and the current vehicle based on the information about the preceding vehicle in the target lane, and determining a longitudinal distance between the following vehicle in the target lane and the current vehicle based on the information about the following vehicle in the target lane;

determining that the risk level meets the first risk condition, in response to the longitudinal distance between the preceding vehicle in the target lane and the current vehicle is within a first threshold range and the longitudinal distance between the following vehicle in the target lane and the current vehicle included in the information about the following vehicle in the target lane is within a second threshold range;

determining that the risk level meets the second risk condition, in response to the longitudinal distance between the preceding vehicle in the target lane and the current vehicle is within a third threshold range, or the longitudinal distance between the following vehicle in the target lane and the current vehicle included in the information about the following vehicle in the target lane is within a fourth threshold range, or a static obstacle is present within a preset range in the target lane; and

determining that the risk level meets the third risk condition, in response to no preceding vehicle, no following vehicle, and no static obstacle are present within a preset range in the target lane.

6. The lane change control method according to claim 5, wherein the information about the preceding vehicle in the target lane comprises a relative position, speed, acceleration, time headway, and risk coefficient of the preceding vehicle in the target lane with respect to the current vehicle; and the information about the following vehicle in the target lane comprises a relative position, speed, acceleration, time headway, and risk coefficient of the following vehicle in the target lane with respect to the current vehicle; and

said determining a longitudinal distance between the preceding vehicle in the target lane and the current vehicle based on the information about the preceding vehicle in the target lane comprises:

calculating a minimum forward following distance based on the relative position, speed, acceleration, and time headway of the preceding vehicle in the target lane with respect to the current vehicle; and

calculating the longitudinal distance between the preceding vehicle in the target lane and the current vehicle based on the minimum forward following distance and the risk coefficient of the preceding vehicle; and

said determining a longitudinal distance between the following vehicle in the target lane and the current vehicle based on the information about the following vehicle in the target lane comprises:

calculating a minimum rearward following distance based on the relative position, speed, accelerations, and time headway of the following vehicle in the target lane with respect to the current vehicle; and

calculating the longitudinal distance between the following vehicle in the target lane and the current vehicle based on the minimum rearward following distance and the risk coefficient of the following vehicle.

7. The lane change control method according to claim 1, before entering the lane change execution state in response to identification of a lane change instruction, further comprising:

determining a lane change need based on at least one of a navigation need, a need to overtake a slow-moving vehicle, and a need to bypass an obstacle;

determining whether a lane change space is available based on the lane change need; and

generating the lane change instruction in response to a lane change space is available.

8. The lane change control method according to claim 2, where said planning an avoidance path based on the driving information of the current vehicle and the driving information of the risk target comprises:

determining a position of a front axle center of the current vehicle based on the driving information of the current vehicle;

determining a target lane guidance line of a lane where the risk target is located based on the driving information of the risk target;
calculating a lateral offset based on the position of the front axle center of the current vehicle and the target lane guidance line; and
determining the avoidance path based on the lateral offset.

9. A lane change control apparatus, comprising:

a determining module, configured to enter a lane change execution state in response to identification of a lane change instruction, and determine a risk level of a current vehicle; and
an executing module, configured to select a risk target in response to the risk level meets a first risk condition, and control the current vehicle to perform an interactive lane change with the risk target.

10. The lane change control apparatus according to claim 9, wherein the executing module is configured to:

select the risk target;
acquire driving information of the current vehicle and driving information of the risk target;
plan an avoidance path based on the driving information of the current vehicle and the driving information of the risk target;
control the current vehicle to move to an aligned state following the avoidance path; and
maintain the current vehicle in the aligned state, acquire lane conditions, and plan a driving path based on the lane conditions.

11. The lane change control apparatus according to claim 9, wherein the executing module is further configured to:

change the lane change execution state to a lane change cancellation state and control the current vehicle to return to its original lane, in response to the risk level meets a second risk condition; and
control the current vehicle to perform a normal lane change, in response to the risk level meets a third risk condition.

12. The lane change control apparatus according to claim 11, wherein the determining module is configured to:

acquire information about a lane change space, information about a preceding vehicle in a target lane, information about a following vehicle in the target lane, and information about a static obstacle;

determine a longitudinal distance between the preceding vehicle in the target lane and the current vehicle based on the information about the preceding vehicle in the target lane, and determine a longitudinal distance between the following vehicle in the target lane and the current vehicle based on the information about the following vehicle in the target lane;
determine that the risk level meets the first risk condition, in response to the longitudinal distance between the preceding vehicle in the target lane and the current vehicle is within a first threshold range, and the longitudinal distance between the following vehicle in the target lane and the current vehicle included in the information about the following vehicle in the target lane is within a second threshold range;
determine that the risk level meets the second risk condition, in response to the longitudinal distance between the preceding vehicle in the target lane and the current vehicle is within a third threshold range, or the longitudinal distance between the following vehicle in the target lane and the current vehicle the information about the following vehicle in the target lane is within a fourth threshold range, or a static obstacle is present within a preset range in the target lane; and
determine that the risk level meets the third risk condition, in response to no preceding vehicle, no following vehicle, and no static obstacle are present within a preset range in the target lane.

13. A terminal device, comprising a memory, a processor, and a lane change control program stored in the memory and executable on the processor, wherein the lane change control program, when executed by the processor, implements the steps of the lane change control method according to any one of claims 1 to 8.

14. A computer-readable storage medium having a lane change control program stored thereon, wherein the lane change control program, when executed by a processor, implements the steps of the lane change control method according to any one of claims 1 to 8.

Fig. 1

entering a lane change execution state in response to identification of a lane change instruction, and determining a risk level of a current vehicle — S10

if the risk level meets a first risk condition, selecting a risk target and controlling the current vehicle to perform an interactive lane change with the risk target — S20

Fig. 2

Fig. 3

| | |
|---|---|
| entering a lane change execution state in response to identification of a lane change instruction, and determining a risk level of a current vehicle | S10 |
| if the risk level meets a first risk condition, selecting a risk target and controlling the current vehicle to perform an interactive lane change with the risk target | S20 |
| changing the lane change execution state to a lane change cancellation state and controlling the current vehicle to return to its original lane, if the risk level meets a second risk condition | S30 |
| controlling the current vehicle to perform a normal lane change, if the risk level meets a third risk condition | S40 |

Fig. 4

Fig. 5

Fig. 6

Fig. 7

| | |
|---|---|
| selecting the risk target | S201 |
| acquiring driving information of the current vehicle and driving information of the risk target | S202 |
| planning an avoidance path based on the driving information of the current vehicle and the driving information of the risk target | S203 |
| controlling the current vehicle to move to an aligned state following the avoidance path | S204 |
| maintaining the current vehicle in the aligned state, acquiring lane conditions, and planning a driving path based on the lane conditions | S205 |

Fig. 8

Fig. 9

Fig. 10

Fig. 11

State ① : initial state
State ② : straight state
State ③ : initially expected state

Path 1

Path 2

Front axle center

Rear axle center

Current lane

Target lane

Fig. 12

19

Fig. 13

## INTERNATIONAL SEARCH REPORT

| International application No. |
| --- |
| **PCT/CN2024/101878** |

**A.    CLASSIFICATION OF SUBJECT MATTER**

B60W30/18(2012.01)i

According to International Patent Classification (IPC) or to both national classification and IPC

**B.    FIELDS SEARCHED**

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNTXT, ENTXTC, VEN, CNKI: 小鹏, 绕行, 借道, 绕障, 换道, 变道, 安全距离, lane change, bypass, safe distance

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116674553 A (GUANGZHOU XPENG AUTOMATIC DRIVING TECHNOLOGY CO., LTD.) 01 September 2023 (2023-09-01) description, paragraphs 48-174 | 1-14 |
| X | CN 114987554 A (CHONGQING CHANG'AN AUTOMOBILE CO., LTD.) 02 September 2022 (2022-09-02) description, paragraphs 44-143 | 1-5, 7, 9-14 |
| Y | CN 114987554 A (CHONGQING CHANG'AN AUTOMOBILE CO., LTD.) 02 September 2022 (2022-09-02) description, paragraphs 44-143 | 6, 8 |
| Y | CN 107344552 A (HARBIN UNIVERSITY OF SCIENCE AND TECHNOLOGY et al.) 14 November 2017 (2017-11-14) description, paragraphs 7-35 | 6 |
| Y | CN 115384552 A (APOLLO INTELLIGENT TECHNOLOGY (BEIJING) CO., LTD.) 25 November 2022 (2022-11-25) description, paragraphs 11-195, and figures 1-8 | 8 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 August 2024** | **24 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/101878** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 106427998 A (JIANGSU UNIVERSITY) 22 February 2017 (2017-02-22) entire document | 1-14 |
| A | WO 2019243695 A1 (PSA AUTOMOBILES S.A.) 26 December 2019 (2019-12-26) entire document | 1-14 |

Form PCT/ISA/210 (second sheet) (July 2022)

## INTERNATIONAL SEARCH REPORT
### Information on patent family members

| | International application No. |
|---|---|
| | **PCT/CN2024/101878** |

| Patent document cited in search report | | | Publication date (day/month/year) | Patent family member(s) | | | Publication date (day/month/year) |
|---|---|---|---|---|---|---|---|
| CN | 116674553 | A | 01 September 2023 | None | | | |
| CN | 114987554 | A | 02 September 2022 | None | | | |
| CN | 107344552 | A | 14 November 2017 | None | | | |
| CN | 115384552 | A | 25 November 2022 | None | | | |
| CN | 106427998 | A | 22 February 2017 | None | | | |
| WO | 2019243695 | A1 | 26 December 2019 | FR | 3082812 | A1 | 27 December 2019 |
| | | | | FR | 3082812 | B1 | 11 September 2020 |
| | | | | EP | 3810473 | A1 | 28 April 2021 |
| | | | | EP | 3810473 | B1 | 13 September 2023 |

Form PCT/ISA/210 (patent family annex) (July 2022)

**REFERENCES CITED IN THE DESCRIPTION**

**Patent documents cited in the description**

- CN 2023107720680